(19) Europäisches Patentamt

European Patent Office

Office européen des brevets

(11) Veröffentlichungsnummer: **0 326 024 B1**

(12) **EUROPÄISCHE PATENTSCHRIFT**

(45) Veröffentlichungstag der Patentschrift: **08.09.93**

(21) Anmeldenummer: **89100905.2**

(22) Anmeldetag: **20.01.89**

(51) Int. Cl.⁵: **C08L 25/12**, //(C08L25/12, 51:04,51:04)

(54) **Formmasse und deren Verwendung.**

(30) Priorität: **29.01.88 DE 3802614**

(43) Veröffentlichungstag der Anmeldung:
**02.08.89 Patentblatt 89/31**

(45) Bekanntmachung des Hinweises auf die Patenterteilung:
**08.09.93 Patentblatt 93/36**

(84) Benannte Vertragsstaaten:
**BE DE FR GB NL**

(56) Entgegenhaltungen:
**EP-A- 0 052 732**

(73) Patentinhaber: **BASF Aktiengesellschaft
Carl-Bosch-Strasse 38
D-67063 Ludwigshafen(DE)**

(72) Erfinder: **Muehlbach, Klaus, Dr.
Dr.-Heinrich-Winter-Strasse 19
D-6148 Heppenheim(DE)**
Erfinder: **Scharf, Bernhard, Dr.
Branichstrasse 30
D-6905 Schriesheim(DE)**
Erfinder: **Brandt, Hermann, Dr.
Keltenstrasse 30
D-6707 Schifferstadt(DE)**

**Beschreibung**

Die Erfindung betrifft eine Formmasse aus einem (Misch)Polymerisat, einem Pfropfmischpolymerisat auf Basis von konjugierten Dienen, das in Masse oder Lösung hergestellt ist, und einem weiteren in Emulsion hergestellten Pfropfmischpolymerisat, das eine andere Pfropfgrundlage aufweist.

Zum Stand der Technik werden genannt:

(1) DE-OS 28 46 754

(2) DE-OS 29 01 576

(3) DE-PS 30 44 110 und

(4) EP-PS 0 190 884.

In (1) bis (3) sind Formmassen auf Basis von Mischpolymerisaten und jeweils zwei unterschiedlichen Pfropfmischpolymerisaten beschrieben. Aus (4) ist eine Mischung aus einem Mischpolymerisat und einem trimodal aufgebauten Pfropfmischpolymerisat bekannt, wobei die grobteiligen Anteile des Pfropfmischpolymerisates in Lösung hergestellt sind und deren Anteil mehr als 10 Gew.%, bezogen auf den Gesamtelastomergehalt, ausmacht. In (1) und (2) werden die eine unterschiedliche Pfropfgrundlage aufweisenden Pfropfmischpolymerisate in Emulsion erzeugt, während in (3) das Pfropfmischpolymerisat auf Basis von konjugierten Dienen in Masse oder Lösung hergestellt wird und das weitere Pfropfmischpolymerisat bimodal aufgebaut ist.

Es ist bekannt, thermoplastisch verarbeitbare schlagzähe Formmassen herzustellen, indem man Styrol/Acrylnitril-Copolymerisate durch Einarbeiten von Kautschuken modifiziert. Dies geschieht im allgemeinen durch Pfropfmischpolymerisation von Styrol und Acrylnitril in Gegenwart des Kautschuks sowie gegebenenfalls nachträgliches Abmischen dieses Pfropfproduktes mit einer separat hergestellten Hartkomponente, die im allgemeinen aus einem Styrol-Acrylnitril-Copolymerisat besteht. Je nach Art des bei der Herstellung eingesetzten Kautschuks werden Formmassen mit unterschiedlichem Eigenschaftsbild erhalten.

Bei den sogenannten ASA-Polymerisaten wird ein Kautschuk zur Schlagzähmodifizierung auf Basis von Acrylaten verwendet. Die so erhaltenen Produkte besitzen eine sehr gute Witterungsstabilität und gute Schlagzähigkeit. Nicht zufriedenstellend ist die mangelnde Kältezähigkeit und die Tatsache, daß die gute Schlagzähigkeit insbesondere bei feinteiligen Pfropfkautschuken erst bei hohen Spritztemperaturen erreicht wird.

Durch Zusatz von in Emulsion hergestellten Pfropfkautschuken auf Basis von Polybutadien läßt sich zwar die Tieftemperaturzähigkeit verbessern; dies geht aber auf Kosten der guten Bewitterungsstabilität.

Es wurde nun überraschenderweise gefunden, daß der Zusatz von in Masse oder Lösung hergestellten grobteiligen Pfropfkautschuken auf Basis von polymerisierten Dienen die Kältezähigkeit anhebt, wobei die Witterungsbeständigkeit nur sehr viel weniger reduziert wird als bei Zusatz von in Emulsion gepfropften Dien-Kautschuken. Weiterhin bewirkt der Zusatz solcher grobteiligen, in Masse oder Lösung hergestellter Pfropfkautschuk zu ASA, daß die maximale Schlagzähigkeit bereits bei niedrigen Spritztemperaturen erreicht wird.

Dies wird erreicht, indem der Anteil der Pfropfgrundlage des ASA-Polymerisats mehr als 90 Gew.%, bezogen auf Summe der Pfropfgrundlage aus ASA- und ABS-Polymerisat, beträgt.

Die Erfindung betrifft eine Formmasse, enthaltend

A ein aus einer harten Phase aufgebautes Polymerisat, das bezogen auf A,

$a_1$) 60 bis 80 Gew.% mindestens eines vinylaromatischen Monomeren und

$a_2$) 20 bis 40 Gew.% mindestens ein ethylenisch ungesättigten Monomeren aus der Gruppe von Acrylnitril und Methacrylnitril oder

$a_3$) 20 bis 40 Gew.% Alkylmethacrylat einpolymerisiert enthält, wobei die Summe der Anteile von $a_1$) und $a_2$) bzw. $a_1$) und $a_3$) sich zu 100 % ergänzen,

B ein Pfropfmischpolymerisat, das

ba) eine Hartphase und

bb) eine Elastomerphase aufweist mit einem Partikeldurchmesser im Bereich von 0,7 bis 10 $\mu$m und wobei das Pfropfmischcopolymerisat B mindestens je

bc) ein vinylaromatisches Monomeres,

bd) ein ethylenisch ungesättigtes Monomeres,

be) ein aliphatisches konjugiertes Dien als Monomeres

einpolymerisiert enthält, wie es erhalten wird, wenn man 100 Gew.-Teile einer Mischung aus den ein hartes Polymerisat bildenden Monomeren (bc + bd) in Gegenwart von 5 bis 25 Gew.-Teilen eines darin und ggf. zusätzlich in einem inerten organischen Lösungsmittel gelösten elastomeren Polymerisats oder Copolymerisats als Pfropfgrundlage, das aus den Monomeren be) oder be) + bc) oder be) + bd) aufgebaut ist, polymerisiert, wobei 3 bis 25 Gew.% der ein hartes Polymerisat bildenden Monomeren (bc + bd), bezogen auf die Summe von bc) und bd), auf die Pfropfgrundlage aufgepfropft worden sind,

C ein Pfropfmischpolymerisat, das

 ca) eine Hartphase als Pfropfreis und

 cb) eine Elastomerphase als Pfropfgrundlage aufweist, wobei letztere im wesentlichen Partikel eines mittleren Teilchendurchmessers im Bereich von 0,05 bis 0,6 $\mu$m (Gewichtsmittel) aufweist, und wobei das Pfropfmischpolymerisat C mindestens je ein

 cc) vinylaromatisches Monomeres

 cd) ein ethylenisch ungesättigtes Monomeres,

 ce) ein Monomeres eines Acrylsäurealkylesters mit 2 bis 8 C-Atomen, sowie geringe Mengen an pfropf- und vernetzungsaktiven Comonomeren

als Bestandteil enthält, wie es erhalten wird, wenn man eine Mischung der die Hartphase bildenden Monomeren (cc + cd) in einer wäßrigen Emulsion auf ein die elastomere Phase bildenden kautschukartigen Polymerisat der Monomeren ce) als Pfropfgrundlage in einem Anteil von 20 bis 60 Gew.%, bezogen auf die Summe von cc), cd) und ce), aufpfropft.

Die Formmasse ist dadurch gekennzeichnet, daß sie 40 bis 80 Gew.% des Polymerisats A und 20 bis 60 Gew.% der Pfropfmischpolymerisate B + C, jeweils bezogen auf die Summe von A + B + C, enthält und der Anteil der Elastomerphase cb) des Pfropfmischpolymerisats C mehr als 90 Gew.% und nicht mehr als 98 Gew.%, bezogen auf die Summe der Elastomerphasen cb) und bb), beträgt.

Nachstehend werden die Zusammensetzung der Formmasse aus den Komponenten, deren Herstellung und die Herstellung der Formmasse beschrieben.

Die erfindungsgemäße Formmasse enthält die Komponenten in folgenden Anteilen, jeweils bezogen auf A + B + C in Gew.%.

A:   40 bis 80 Gew.%, vorzugsweise 45 bis 75 Gew.%

B + C:   60 bis 20 Gew.%, vorzugsweise 55 bis 25 Gew.%, wobei der Anteil der Komponenten B oder C durch die Bedingung

$$\frac{cb}{bb + cb} = 90 \text{ bis } 98,$$

insbesondere 91 bis 97 festgelegt ist.

Die Formmasse kann, bezogen auf 100 Gew.-Teile A + B + C, jeweils 0,01 bis 40 Gew.-Teile üblicher Zusatzstoffe (Komponente D) aufweisen.

Komponente A

Als Komponente A kann ein Homopolymerisat von Akylmethacrylaten mit 1 bis 6 C-Atomen im Alkylrest in Betracht kommen. Vorzugsweise wird PMMA angewendet.

Üblich ist ein Mischpolymerisat A, das aus Monomeren, die eine harte Phase bilden, aufgebaut ist. Es kann auf üblichem Wege durch Polymerisieren eines vinylaromatischen Monomeren $a_1$) in Anteilen von 80 bis 60 Gew.%, insbesondere 75 bis 65 Gew.%, in Mischung mit einem ethylenisch ungesättigten Monomeren $a_2$), wie Acrylnitril, in Anteilen von 40 bis 20, insbesondere von 35 bis 25 Gew.% oder Alkylmethacrylaten $a_3$) oder MMA in Anteilen von 20 bis 55 hergestellt werden, wobei gilt $\Sigma\ a_1 + a_3 = 100$. Als vinylaromatisches Monomeres $a_1$) kommen Styrol sowie die Alkylstyrole, hierbei insbesondere das $\alpha$-Methylstyrol oder p-Methylstyrol in Frage. $\alpha$-Methylstyrol wird vorwiegend dann eingesetzt, wenn hohe Wärmeformbeständigkeit der Formmassen eingestellt werden soll. Üblicherweise werden für diesen Zweck Mischungen von Styrol und Acrylnitril mit bis zu 30 Gew.% $\alpha$-Methylstyrol angewendet. Bevorzugt werden Mischpolymerisate A angewendet, die 20 bis 35 Gew.% Acrylnitril und 80 bis 65 Gew.% Styrol enthalten. Als weitere ethylenisch ungesättigte Monomeren können auch Maleinsäureanhydrid, N-substituierte Maleinimide eingesetzt werden. Diese Mischpolymerisate sind im Handel erhältlich und können z.B. der Lehre der DE-AS 10 01 001 bzw. nach der Lehre der DE-PS 100 03 436 hergestellt werden. Der Molekulargewichtsbereich des Homopolymerisats oder von Mischpolymerisat A beträgt 80.000 bis 250.000 (Gewichtsmittel $\overline{M}_w$ aus Lichtstreuung). Dies entspricht Viskositätszahlen (VZ) von 35 bis 130 [ml/g], vorzugsweise von 50 bis 100 [ml/g].

Komponente B

Das Pfropfmischpolymerisat B wird vorzugsweise in Lösung hergestellt. Es ist aufgebaut aus 2 Phasen, einer Hartphase ba), aus je mindestens einem vinylromatischen Monomeren bc) und einem ethylenisch-ungesättigten Monomeren bd), und einer Elastomerphase bb). Letztere ist aufgebaut aus einem kautschukartigen Polymerisat oder Copolymerisat, das entweder im wesentlichen ein konjugiertes aliphatisches Dien mit 4 oder 5 Kohlenstoffatomen oder eine Mischung aus diesen enthält. Das Copolymerisat kann auch einen Diengehalt größer 50 %, vorzugsweise zwischen 60 und 85 Gew.% und einen Anteil von kleiner 50 %, vorzugsweise 15 bis 40 Gew.% eines vinylaromatischen Monomeren, insbesondere Styrol, aufweisen. Bevorzugt werden Polybutadiene mit cis-Gehalten von 30 bis 40 und 1,2-Vinylgehalten von 7 bis 14. Von den Copolymerisaten werden insbesondere die Blockcopolymerisate von Styrol und Butadien bevorzugt. Es können auch Gemische aus Polybutadien- und Styrol-Butadienblock-Kautschuken angewendet werden. wesentlich ist, daß die Elastomerphase bb) des Pfropfmischpolymerisates B einen Partikeldurchmesser im Bereich von 0,7 bis 10 $\mu$m, insbesondere einen solchen im Bereich von 0,9 bis 2,1 $\mu$m aufweist. Es handelt sich bei allen Angaben über die Partikeldurchmesser um Mittelwerte, die durch Auszählen elektronenmikroskopischer Aufnahmen erhalten werden.

Die Elastomerphase bb) des Pfropfmischpolymerisates B als auch die entsprechende Phase cb) des Pfropfmischpolymerisates C und die der Formmasse sind mittels elektronenmikroskopischer Aufnahmen nach besonderen Techniken wie Osmiumtetroxid-Kontrastierung sichtbar zu machen.

Als vinylaromatische Monomere bc) für den Aufbau des Pfropfmischpolymerisates B kommen vorzugsweise im wesentlichen Styrol alleine oder aber Mischungen von Styrol und $\alpha$-Methylstyrol, letzteres insbesondere zur Erzielung wärmeformbeständiger Formmassen, in Betracht. Die vinylaromatischen Monomeren werden vorzugsweise zusammen mit den ethylenisch ungesättigten Monomeren bd), nämlich (Meth)-acrylnitril oder Methylmethacrylat oder Mischungen davon angewendet. Sofern die Hartphase ba) des Pfropfmischpolymerisats B, überwiegend aus Acrylnitril und Styrol aufgebaut wird, werden Mischungen von 15 bis 35 Gew.% Acrylnitril und 85 bis 65 Gew.% Styrol angewendet. Im Falle des Aufbaus der Hartphase aus Acrylnitril, Styrol und $\alpha$-Methylstyrol, werden 15 bis 35 Gew.% der Monomeren bd) und 65 bis 85 Gew.% der Monomeren bc) in der Mischung aus 100 Gew.-Teilen vorgelegt.

Im Fall des Aufbaus der Hartphase des Pfropfmischpolymerisates B aus Styrol und Methylmethacrylat werden Gewichtsverhältnisse S/MMA von 80/20 bis 45/55 angewendet.

Die Monomerenmischung für die Herstellung des Pfropfmischpolymerisats B kann somit 85 bis 65 Gew.% des vinylaromatischen Monomeren bc) und 15 bis 35 Gew.% des ethylenisch ungesättigten Monomeren bd) enthalten. Je nach den Anforderungen, die an die Formmasse gestellt werden, kann man innerhalb der angegebenen Bereiche variieren, um zu mehr oder weniger wärmeformbeständigen oder, bei Anteilen der Grundbausteine bd) an den oberen Grenzen der genannten Bereiche, chemikalienbeständigen Formmassen zu gelangen. Die Herstellung des Pfropfmischpolymerisats B erfolgt vorzugsweise durch Umsetzen von 100 Gew.-Teilen einer Mischung der ein hartes Polymerisat bildenden Monomeren (bc + bd) in Gegenwart von 5 bis 25 Gew.-Teilen eines darin gegebenenfalls unter Zuhilfenahme eines Lösungsmittels gelösten, elastomeren Polymerisats als Pfropfgrundlage. Die Pfropfcopolymerisation kann in Gegenwart indifferenter Lösungsmittel durchgeführt werden; beispielsweise können 5 bis 30 Gew.%, bezogen auf die Gesamtlösung, eines Alkylaromaten, insbesondere Ethylbenzol, angewendet werden. Eine bevorzugte Arbeitsweise besteht darin, daß das Pfropfmischpolymerisat B gemäß der Lehre der DE-OS 14 95 089 hergestellt wird. Die Pfropfcopolymerisation von Styrol und Acrylnitril kann in Gegenwart von Butadienpolymerisaten mit einem Anteil von 85 % oder mehr an 1,4-Struktur und einem Anteil von über 30 % cis-Konfiguration erfolgen. Bei der Verwendung von Blockcopolymerisaten aus Butadien-Styrol, insbesondere von Blockcopolymerisaten, die durch anionische Polymerisation mit Hilfe von lithiumorganischen Initiatoren hergestellt werden, oder bei Verwendung von Mischungen aus Polybutadien und bestimmten Anteilen an Blockcopolymerisaten als Elastomerphase werden im Prinzip dieselben Herstellungsbedingungen eingehalten. Die Pfropfcopolymerisation wird zweckmäßigerweise in mehreren Stufen bei Temperaturen zwischen 60 und 170°C, vorzugsweise zwischen 100 und 160°C durchgeführt. Die Polymerisation kann thermisch oder durch Initiatoren in bekannter Weise ausgelöst werden. Bei der Polymerisation können die üblichen Hilfsstoffe, nämlich Regler, wie Dodecylmercaptan, Stabilisatoren und Schmiermittel zugegen sein. Die üblichen Mittel und die wirksamen Mengen sind dem Fachmann bekannt. Bei der Durchführung der Pfropfpolymerisation müssen die Bedingungen so eingestellt werden, daß 3 bis 25 Gew.% der Monomeren (bc und bd) bezogen auf die Summe von bc) und bd), auf die Pfropfgrundlage aufgepfropft worden sind.

Die Herstellung von sog. Lösungs-ABS ist dem Fachmann geläufig. Es gibt solche Produkte im Handel.

Komponente C

Die Pfropfmischpolymerisate C sind als "ASA-Kautschuke" bekannt. Ihre Herstellung und der Aufbau sind beispielsweise in DE-OS 28 26 925, DE-OS 31 49 358 und DE-OS 34 14 118 beschrieben.

Die Komponente C wird vorzugsweise gebildet aus

cb) mindestens einer Elastomerphase (Kautschuk), die 40 bis 80 Gew.%, vorzugsweise 50 bis 75 Gew.%, bezogen auf C), ausmacht und aus einer Monomermischung aus

ce) 70 bis 99,9 Gew.%, bezogen auf cb), mindestens eines Alkylacrylats mit 1 bis 8 Kohlenstoffatomen im Alkylrest,

0 bis 30 Gew.%, bezogen auf cb), mindestens eines weiteren copolymerisierbaren monoethylenisch ungesättigten Monomere

und

0,1 bis 5 Gew.%, bezogen auf cb), eines copolymerisierbaren polyfunktionellen, vernetzenden Monomeren durch Polymerisation

hergestellt wird

und

ca) einem Pfropfreis auf dieses Elastomere, das 20 bis 60 Gew.%, vorzugsweise 25 bis 50 Gew.%, bezogen auf C), ausmacht und aufgebaut ist aus mindestens einem vinylaromatischen Monomeren cc) und mindestens einem ethylenisch ungesättigten Monomeren cd).

Im einzelnen besteht die Pfropfhülle aus

cc) 50 bis 95 Gew.% Styrol, $\alpha$-Methylstyrol, kernsubstituiertem Styrol, Methylmethacrylat oder Mischungen daraus, und

cd) 50 bis 5 Gew.% (Meth)acrylnitril, Methylmthacrylat, Maleinsäureanhydrid, N-substituiertem Maleinimid oder Mischungen daraus.

Als Monomere für die Herstellung der Elastomerphase cb) kommen in Betracht:

ce) 70 bis 99,9 Gew.%, vorzugsweise 95 bis 99,9 Gew.%, bezogen auf cb), eines Alkylacrylates mit 1 bis 8 C-Atomen im Alkylrest, vorzugsweise werden n-Butylacrylat und/oder 2-Ethyl-hexylacrylat angewendet, insbesondere n-Butylacrylat als alleiniges Alkylacrylat.

cb) Gegebenenfalls kann die elastomere Phase cb) auch noch bis zu 30, insbesondere 20 bis 30 Gew.%, jeweils bezogen auf cb), eines weiteren copolymerisierbaren Monomeren, wie Butadien, Isopren, Styrol, Acrylnitril, Methylmethacrylat und/oder Vinylmethylether enthalten.

Um vernetzte Acrylsäureester-Polymerisate zu erhalten, wird die Polymerisation der Acrylsäureester in Gegenwart von 0,1 bis 5 Gew.%, vorzugsweise von 1 bis 4 Gew.%, bezogen auf die bei der Herstellung der Pfropfgrundlage eingesetzten gesamten Monomeren, eines copolymerisierbaren, polyfunktionellen, vorzugsweise bi- oder trifunktionellen, die Vernetzung bewirkenden Monomeren durchgeführt. Als solche bi- oder polyfunktionellen Vernetzungs-Monomeren eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphhtalat, Triallylcyanat oder Triallylisocyanat. Als besonders günstiges Vernetzungsmonomeres hat sich der Acrylsäureester des Tricyclodecenylalkohols erwiesen (vgl. DE-PS 12 60 135).

Die Kautschuke liegen in den Pfropfmischpolymerisaten C in Form wenigstens partiell vernetzter Teilchen einer mittleren Teilchengröße von 0,05 bis 0,6 $\mu$m vor ($d_{50}$-Wert der integrierten Masseverteilung).

Um dies zu erreichen, können die Teilchen des Kautschuks in bekannter Weise, z.B durch Agglomeration, vergrößert werden, so daß der Latex bimodal (0,05 bis 0,15 $\mu$m und 0,4 bis 0,5 $\mu$m) aufgebaut ist.

Die Herstellung des Pfropfmischpolymerisats C kann beispielsweise nach der in der DE-PS 12 60 135 beschriebenen Methode erfolgen.

Der Aufbau des Pfropfreises des Pfropfmischpolymerisats kann ein- oder zweistufig erfolgen, wobei vorzugsweise bei grobteiligen Produkten zweistufig gepfropft wird.

Im Falle des einstufigen Aufbaues der Pfropfreises wird ein Gemisch der Monomeren cc) und cd) in dem gewünschten Gew.-Verhältnis im Bereich von 90:10 bis 65:35 in Gegenwart der Elastomerphase cb, in an sich bekannter Weise (vgl. z.B. DE-OS 28 26 925), vorzugsweise in Emulsion, polymerisiert.

Im Falle eines zweistufigen Aufbaus des Pfropfreises ca) macht die 1. Stufe 20 bis 70 Gew.%, vorzugsweise 25 bis 50 Gew.%, bezogen auf ca), aus. Zu ihrer Herstellung werden nur vinylaromatische Kohlenwasserstoffe mit bis zu 12 C-Atomen verwendet.

Die 2. Stufe des Pfropfreises macht 30 bis 80 Gew.%, insbesondere 50 bis 75 Gew.%, jeweils bezogen auf ca), aus. Zu ihrer Herstellung werden Mischungen aus den genannten vinylaromatischen Kohlenwasserstoffen cc) und monoethylenisch ungesättigten Monomeren cd) im Gewichtsverhältnis cc)cd) von 90:10 bs 60:40, insbesondere von 80:20 bis 70:30 angewendet.

Als bevorzugte Monomeren-Gemische werden vor allem Styrol und Acrylnitril, α-Methylstyrol und Acrylnitril, Styrol, Acrynitril und Methylmethacrylat, Styrol und Maleinsäureanhydrid eingesetzt.

Bei der Herstellung des Pfropfmischpolymerisats C entstehenden, nicht gepfropfte Anteile an Copolymerisaten aus den Pfropfmonomeren cc) und/oder cd). Sie werden im Sinne der vorliegenden Erfindung der Komponente C zugerechnet.

Die Bedingungen der Pfropfmischpolymerisation sind so zu wählen, daß Teilchengrößen von 0,05 bis 0,6 $\mu$m ($d_{50}$-Wert d. integralen Massenverteilung) resultieren. Maßnahmen hierzu sind bekannt und z.B. in der DE-PS 12 60 135 und der DE-OS 28 26 925 beschrieben.

Um möglichst zähe Produkte zu erzielen, ist es häufig von Vorteil, eine Mischung mindestens zweier Pfropfmischpolymerisate mit unterschiedlicher Teilchengröße zu verwenden. Der chemische Aufbau der beiden Pfropfmischpolymerisate ist dann vorzugsweise derselbe, obwohl die Hülle des grobteiligen Pfropfmischpolymerisates insbesondere auch zweistufig aufgebaut werden kann.

In einer bevorzugten Ausführungsform kann eine Mischung aus zwei Pfropfmischpolymerisaten mit Teilchendurchmessern ($d_{50}$-Wert der integralen Massenverteilung) von 0,05 bis 0,15 $\mu$m bzw. 0,4 bis 0,5 $\mu$m im Gewichtsverhältnis 70:30 bis 30:70 eingesetzt werden.

Komponente D

Die erfindungsgemäße Formmasse kann als Komponente D übliche Zusatzstoffe enthalten, die für SAN-Polymerisate und Pfropfmischpolymerisate auf Basis von ASA und ABS oder deren Mischungen typisch und gebräuchlich sind. Als solche Zusatzstoffe seien beispielsweise genannt: Füllstoffe - insbesondere Glas-und Kohlenstoffasern -, sowie Materialien zur Verleihung von elektromagnetischen Eigenschaften (z.B. Metallflocken, -pulver, -fasern, metallbeschichtete Füllstoffe), Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind.

Genannt seien auch weitere Thermoplaste, wie Polycarbonate, Polysulfone und Polyester, die mit der erfindungsgemäßen Formmasse abgemischt werden können.

Herstellung der erfindungsgemäßen Formmasse

Zur Herstellung der erfindungsgemäßen Formmasse werden die Komponenten A, B und C bei Temperaturen zwischen 220 und 300°C auf üblichen Verarbeitungsmaschinen wie Extrudern, Walzen oder Knetern vermischt, gegebenenfalls unter direkter Einspeisung der wäßrigen Dispersion der Pfropfkautschukkomponente C und gleichzeitiger Trocknung. Bereits bei der Herstellung dieser Mischung oder bei der Herstellung der Komponenten oder einer Komponente können die vorstehend erwähnten Zusatzstoffe zugesetzt werden.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellte Formmassen Formteile durch Spritzgießen für den Automobilbau hergestellt.

Die in der vorliegenden Anmeldung beschriebenen Parameter werden wie folgt bestimmt:

1. die mittlere Teilchengröße und die Teilchengrößenverteilung der in Emulsion hergestellten Elastomerteilchen cb) wird aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem $d_{50}$-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen können neben dem $d_{50}$-Wert (mittlerer Teilchendurchmesser) die sich aus der integralen Massenverteilung ergebenden $d_{10}$- und $d_{90}$-Werte herangezogen werden. Der $d_{10}$- bzw. $d_{50}$-Wert der integralen Massenverteilung ist dabei entsprechend dem $d_{50}$-Wert definiert mit dem Unterschied, daß sie auf 10 bzw. 90 Gew.% der Teilchen bezogen sind.

6

2. Die mittlere Teilchengröße der Elastomerpartikel der in Lösung hergestellten Komponente B wurde mittels Elektronenmikroskopie bestimmt (Auszählung).

3. Die Kerbschlagzähigkeit, $a_K$, in [kJ/m$^2$] der Proben wurde nach DIN 53 453 an gespritzten Normkleinstäben bei 23°C und -20°C gemessen.

4. Die Viskositätszahl, VZ, der SAN-Copolymerisate wurde in 0,5 %iger Lösung in Dimethylformamid bei 23°C bestimmt.

5. Vicat B Wert in [°C] wurde nach DIN 53 460 bestimmt.

6. Die Durchstoßarbeit, $W_{ges}$, im Plastechontest in [Nm], wurde nach DIN 53 453 an spritzgegossenen 2 mm dicken Rundscheiben bestimmt. Die Prüfung erfolgte bei Raumtemperatur, RT, und -20°C.

7. Bewitterungstest:

Die Witterungsstabilität wurde an Normkleinstäben (50 x 6 4 mm) bestimmt. Diese wurden in einem Xenontestgerät der Fa. Hereaus bei 45°C bestrahlt und anschließend deren Zähigkeit bestimmt. Die Zähigkeit wurde in Anlehnung an den Izod-Test (Iso 180) aber am ungekerbten Normkleinstab so bestimmt, daß der Schlag auf die belichtete Seite erfolgt. Die als Maß für die Bewitterungsstabilität angegebene Zeit ist diejenige, bei der die Zähigkeit auf 75 % ihres ursprünglichen Wertes abgefallen ist.

Für die Durchführung der Beispiele und von Vergleichsversuchen wurden die folgenden Produkte verwendet (alle Angaben in % oder Teilen beziehen sich auf das Gewicht, falls nichts anderes vermerkt ist):

Komponente A

$A_1$ Ein Monomerengemisch aus Styrol und Acrylnitril wurde unter üblichen Bedingungen in Lösung polymerisiert. Das erhaltene Styrol/Acrylnitril-Coolymerisathatte einen Acrylnitril-Gehalt von 35 % und eine Viskositätszahl von 80 ml/g.

$A_2$ Es wurde ein analog hergestelltes Copolymerisat aus $\alpha$-Methylstyrol und Acrylnitril mit 30 % AN und einer Viskositätszahl von 65 ml/g eingesetzt.

Komponente B

$B_1$ Lösungs-ABS

Es wurde ein handelsübliches Lösungs-ABS der Dow (Dow LABS 2020) mit einem mittleren Teilchen-durchmesser von 1,4 $\mu$m verwendet, das 89,5 Teile Styrol und Acrylnitril (S/AN Gewichtsverhältnis 76/24) und 10,5 Teile Polybutadien enthält. Pfropfgrad 41 %, der lösliche Anteil des S/AN-Copolymerisates besaß eine VZ von 84; der Gelgehalt beträgt 20 %, d.h. 80 Gew.% der Mischung repräsentierten ein ungepfropftes S/AN-Copolymerisat.

$B_2$ Emulsions-ABS

Durch Polymerisation von 58 Teilen Butadien in Gegenwart einer Lösung von 0,6 Teilen tert.-Dodecyl-mercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 55°C ein Polybutadienlatex hergestellt. Nach Beendigung der Reaktion wird der Polymerisationsautoklav entspannt. Der Umsatz betrug 98 %.

Es wird ein Polybutadien erhalten, dessen mittlere Teilchengröße bei 0,1 $\mu$m liegt. Der erhaltene Latex wurde durch Zusatz von 25 Teilen einer Emulsion eines Copolymeren aus 96 Teilen Ethylacrylat und 4 Teilen Methacrylsäureamid mit einem Feststoffgehalt von 10 Gewichtsteilen agglomeriert, wobei ein Polybutadienlatex mit einer mittleren Teilchengröße von 0,32 $\mu$m entstand. Nach Zusetzen von 40 Teilen Wasser, 0,4 Teilen Na-$C_{14}$-Alkylsulfonat und 0,2 Teilen Kaliumperoxodisulfat wurden 42 Teile einer Mischung aus Styrol und Acrylnitril im Verhältnis 70:30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

Komponente C

(a) Herstellung des feinteiligen Pfropfmischpolymerisats $C_1$

(a$_1$) 16 Teile Butylacrylat und 0,4 Teile Tricyclodecenylacrylat werden in 150 Teilen Wasser unter Zusatz von einem Teil des Natriumsalzes einer $C_{12}$-$C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Die mittlere Teilchengröße (Gewichtsmittel) wurde zu 96 nm ermittelt. Die Teilchengrößenverteilung war eng (Quotient Q = 0,29).

$(a_2)$ 150 Teile des nach $(a_1)$ erhaltenen Polybutylacrylat-Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet.

(b) Herstellung eines grobteiligen Pfropfmischpolymerisats $C_2$

$(b_1)$ Zu einer Vorlauge aus 1,5 Teilen des in der Stufe $(a_1)$ dieses Beispiels hergestellten Latex wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel) des Latex wurde zu 430 nm ermittelt. Die Teilchengrößenverteilung war eng (Q = 0,1).

$(b_2)$ 150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet.

Komponente $C_3$ - Feinteiliges Pfropfmischpolymerisat

Es wurde wie unter $C_1$ beschrieben verfahren mit dem Unterschied, daß die Pfropfung mit 40 Teilen MMA anstelle des Gemisches aus Styrol/Acrylnitril erfolgte.

Komponente D

Dioctylphthalat

Die Erfindung wird durch die nachstehend beschriebenen Beispiele 1 bis 4 und die Vergleichsversuche I bis III näher erläutert. Die Vergleichsversuche I und III entsprechend der Lehre der DE-PS 30 44 110 (3).

Die Komponenten A, B, C und gegebenenfalls D wurden in den in der Tabelle angegebenen Mengenverhältnissen auf einem Zweiwellenextruder vom Typ Werner & Pfleiderer, ZSK 53, bei einer eingestellten Zylindertemperatur von 250°C und 200 UpM konfektioniert. Der extrudierte Strang wurde durch ein Wasserbad geführt und anschließend granuliert. Das getrocknete Granulat wurde dann auf einer Spritzgußmaschine bei verschiedenen Temperaturen zu Normkleinstäben und Rundscheiben gespritzt, die anschließend geprüft wurden. Die Ergebnisse dieser Messungen sind in Tabelle 2 dargestellt.

Tabelle 1

| Beispiel | Komponenten | | | | | | | Gewichts-* verhältnis d. Elasto- merphasen |
|---|---|---|---|---|---|---|---|---|
| | A | | B | | C | | D | |
| | Art | Menge | Art | Menge | Art | Menge | Menge | |
| 1 | $A_2$ | 58 | $B_1$ | 8 | $C_1$ | 32 | - | 95,8 |
| 2 | $A_1$ | 56 | $B_1$ | 9 | $C_3$ | 35 | 1,0 | 95,7 |
| 3 | $A_1$ | 47 | $B_1$ | 16 | $C_2$ | 46 | 0,5 | 94,3 |
| 4 | $A_1$ | 65 | $B_1$ | 11 | $C_2$ | 23 | 1,5 | 92,3 |
| Vergleichs- versuch | | | | | | | | |
| I | $A_1$ | 55 | $B_1$ | 20 | $C_3$ | 25 | 1,5 | 87,7 |
| II[2] | $A_2$ | 50 | $B_2$ | 16 | $C_1$ | 34 | 1,5 | 68,7 |
| III[1] | $A_2$ | 47 | $B_1$ | 26 | $C_2$ | 27 | - | 85,6 |

$$* \left[ \frac{cb}{cb + bb} \cdot 100 \right] \text{ in Gew.\%}$$

[1]   gemäß der Lehre der DE-OS 30 44 110

[2]   gemäß der Lehre der DE-OS 29 05 576

Tabelle 2

| Beispiel | Spritztemperatur °C | Vicat | $a_K$ | | $W_{ges}$ | | Witterungsstabilität h |
|---|---|---|---|---|---|---|---|
| | | | RT | -20 | RT | -20 | |
| 1 | 230 | 104 | 17 | 3 | 20 | 12 | 92 |
| | 250 | | 19 | 4 | 25 | 19 | |
| | 280 | | 23 | 5 | 25 | 21 | |
| 2 | 230 | 93 | 22 | 4 | 26 | 16 | 96 |
| | 250 | | 25 | 4 | 33 | 21 | |
| | 280 | | 28 | 6 | 35 | 24 | |
| 3 | 280 | 90 | 20 | 9 | 36 | 25 | 98 |
| 4 | 250 | 94 | 14 | 10 | 22 | - | 96 |
| Vergleichsversuche | | | | | | | |
| I | 230 | 90 | 16 | 5 | 20 | 12 | 55 |
| | 250 | | - | 5 | 26 | 19 | |
| | 280 | | 20 | 7 | 32 | 21 | |
| II | 230 | 101,5 | 16 | 5 | 30 | 16 | 61 |
| | 250 | | 21 | 6 | 36 | 20 | |
| | 280 | | 22 | 7 | 35 | 24 | |
| III | 280 | 103 | 19 | 12 | 39 | 24 | 49 |

## Patentansprüche

1. Formmasse, enthaltend

A ein aus einer harten Phase aufgebautes Polymerisat, das bezogen auf A,

$a_1$) 60 bis 80 Gew.% mindestens eines vinylaromatischen Monomeren und

$a_2$) 20 bis 40 Gew.% mindestens ein ethylenisch ungesättigten Monomeren aus der Gruppe von Acrylnitril und Methacrylnitril oder

$a_3$) 20 bis 40 Gew.% Alkylmethacrylat einpolymerisiert enthält, wobei die Summe der Anteile von $a_1$) und $a_2$) bzw. $a_1$) und $a_3$) sich zu 100 % ergänzen,

B ein Pfropfmischpolymerisat, das

ba) eine Hartphase und

bb) eine Elastomerphase aufweist mit einem Partikeldurchmesser im Bereich von 0,7 bis 10 $\mu$m und wobei das Pfropfmischcopolymerisat B mindestens je

bc) ein vinylaromatisches Monomeres,

bd) ein ethylenisch ungesättigtes Monomeres,

be) ein aliphatisches konjugiertes Dien als Monomeres

einpolymerisiert enthält, wie es erhalten wird, wenn man 100 Gew.-Teile einer Mischung aus den ein hartes Polymerisat bildenden Monomeren (bc + bd) in Gegenwart von 5 bis 25 Gew.-Teilen eines darin und ggf. zusätzlich in einem inerten organischen Lösungsmittel gelösten elastomeren Polymerisats oder Copolymerisats als Pfropfgrundlage, das aus den Monomeren be) oder be) + bc) oder be) + bd) aufgebaut ist, polymerisiert, und wobei 3 bis 25 Gew.% der ein hartes Polymerisat bildenden Monomeren (bc + bd), bezogen auf die Summe von bc) und bd), auf die Pfropfgrundlage aufgepfropft worden sind,

C ein Pfropfmischpolymerisat, das

ca) eine Hartphase als Pfropfreis und

cb) eine Elastomerphase als Pfropfgrundlage aufweist, wobei letztere im wesentlichen Partikel eines mittleren Teilchendurchmessers im Bereich von 0,05 bis 0,6 $\mu$m (Gewichtsmittel) aufweist, und wobei das Pfropfmischpolymerisat C mindestens je ein

cc) vinylaromatisches Monomeres

cd) ein ethylenisch ungesättigtes Monomeres,

ce) ein Monomeres eines Acrylsäurealkylesters mit 2 bis 8 C-Atomen, sowie geringe Mengen an pfropf- und vernetzungsaktiven Comonomeren

als Bestandteil enthält, wie es erhalten wird, wenn man eine Mischung der die Hartphase bildenden Monomeren (cc + cd) in einer wäßrigen Emulsion auf ein die elastomere Phase bildendes kautschukartiges Polymerisat der Monomeren ce) als Pfropfgrundlage in einem Anteil von 20 bis 60 Gew.%, bezogen auf die Summe von cc), cd) und ce), aufpfropft,

dadurch gekennzeichnet, daß die Formmasse 40 bis 80 Gew.% des Polymerisats A und 20 bis 60 Gew.% der Pfropfmischpolymerisate B + C, jeweils bezogen auf die Summe von A + B + C, enthält und der Anteil der Elastomerphase cb) des Pfropfmischpolymerisats C mehr als 90 Gew.% und nicht mehr als 98 Gew.%, bezogen auf die Summe der Elastomerphasen cb) und bb), beträgt.

2. Formmasse nach Anspruch 1, dadurch gekennzeichnet, daß sie, bezogen auf 100 Gew.-Teile A + B + C, 0,01 bis 40 Gew.-Teile üblicher Zusatzstoffe (Komponente D) aufweist.

3. Formmasse nach Anspruch 1, dadurch gekennzeichnet, daß bei der Herstellung des Pfropfmischpolymerisats B die Monomerenmischung
85 bis 65 Gew.% Styrol, $\alpha$-Methylstyrol oder Mischungen davon als Monomere bc) und
15 bis 35 Gew.% (Meth)acrylnitril als Monomere bd)
enthält.

4. Formmasse nach Anspruch 3, dadurch gekennzeichnet, daß die Monomerenmischung bc) + bd) auf ein darin unter Zuhilfenahme eines Lösungsmittels gelöstes Polymerisat aus den Monomeren be) polymerisiert wird.

5. Formmasse nach Anspruch 4, enthaltend als Monomeres be) Butadien.

6. Formmasse nach Anspruch 3, dadurch gekennzeichnet, daß die Monomerenmischung bc) + bd) in Gegenwart eines Copolymerisates, das zu mindestens 50 Gew.% aus den Monomeren be) und aus bis zu 50 Gew.% aus dem Monomeren bc), insbesondere Styrol, aufgebaut ist, polymerisiert wird.

7. Formmasse nach Anspruch 6, enthaltend als Monomeres bc) Styrol.

8. Formmasse nach Anspruch 1, dadurch gekennzeichnet, daß die Partikeldurchmesser der Elastomerphase bb) im Bereich von 0,9 bis 2,1 $\mu$m liegt.

9. Formmasse nach Anspruch 1, dadurch gekennzeichnet, daß die Elastomerphase cb) aus n-Butyl- und/oder 2-Ethylhexylacrylat besteht.

10. Formmasse nach Anspruch 1, dadurch gekennzeichnet, daß der mittlere Durchmesser der Elastomerphase cb) 0.05 bis 0,15 $\mu$m beträgt.

11. Formmasse nach Anspruch 1, dadurch gekennzeichnet, daß der mittlere Durchmesser der Elastomerphase cb) 0,4 bis 0,5 $\mu$m beträgt.

12. Verwendung der Formmasse nach Anspruch 1 zur Herstellung von Formteilen.

13. Formteile aus Formmassen nach Anspruch 10.

## Claims

1. A molding material containing
A a polymer built up from a hard phase, which polymer contains, incorporated by polymerization and based on A,
$a_1$) from 60 to 80% by weight of at least one aromatic vinyl monomer
and
$a_2$) from 20 to 40% by weight of at least one ethylenically unsaturated monomer from the group comprising acrylonitrile and methacrylonitrile, or

$a_3$) from 20 to 40% by weight of alkyl methacrylate, the sum of the proportions of $a_1$) and $a_2$) or $a_1$) and $a_3$) totalling 100%,

B a graft copolymer that comprises

ba) a hard phase and

bb) an elastomer phase having a particle diameter in the range from 0.7 to 10 $\mu$m, the graft copolymer B containing, incorporated by polymerization,

bc) at least one aromatic vinyl monomer,

bd) at least one ethylenically unsaturated monomer,

be) at least one aliphatic conjugated diene as monomer

as is obtained by polymerizing 100 parts by weight of a mixture of the monomers (bc + bd) forming a hard polymer in the presence of from 5 to 25 parts by weight of an elastomeric polymer or copolymer dissolved therein and if necessary additionally dissolved in an inert organic solvent, as grafting base, which is built up from the monomers be) or be) + bc) or be) + bd), from 3 to 25% by weight of the monomers (bc + bd) forming a hard polymer, based on the sum of bc) and bd), having been grafted onto the grafting base,

C a graft copolymer which comprises

ca) a hard phase as graft and

cb) an elastomeric phase as grafting base, the latter essentially comprising particles having an average particle diameter in the range from 0.05 to 0.6 $\mu$m (weight average), the graft copolymer C containing

cc) at least one aromatic vinyl monomer,

cd) at least one ethylenically unsaturated monomer,

ce) at least one monomer of an alkyl acrylate having 2 to 8 carbon atoms, and also small amounts of grafting-active and crosslinking-active comonomers

as constituent, as is obtained by grafting a mixture of the monomers (cc + cd) forming the hard phase in an aqueous emulsion onto a rubber-like polymer of the monomers ce) forming the elastomeric phase, as grafting base, in a proportion of from 20 to 60% by weight, based on the sum of cc), cd) and ce),

wherein the molding material contains from 40 to 80% by weight of the polymer A and from 20 to 60% by weight of the graft copolymers B + C, in each case based on the sum of A + B + C, and the proportion of the elastomer phase cd) of the graft copolymer C is more than 90% by weight and not more than 98% by weight, based on the sum of the elastomer phases cb) and bb).

2. A molding material as claimed in claim 1, which comprises, based on 100 parts by weight of A + B + C, 0.01 to 40 parts by weight of conventional additives (component D).

3. A molding material as claimed in claim 1, wherein in the preparation of the graft copolymer B the monomer mixture contains

from 85 to 65% by weight of styrene, $\alpha$-methylstyrene or mixtures thereof as monomer bc) and

from 15 to 35% by weight of (meth)acrylonitrile as monomer bd).

4. A molding material as claimed in claim 3, wherein the monomer mixture bc) + bd) is polymerized onto a polymer, dissolved therein with the aid of a solvent, of the monomers be).

5. A molding material as claimed in claim 4, containing butadiene as monomer be).

6. A molding material as claimed in claim 3, wherein the monomer mixture bc) + bd) is polymerized in the presence of a copolymer that is built up to the extent of at least 50% by weight from the monomer be) and from up to 50% by weight of the monomer bc), in particular styrene.

7. A molding material as claimed in claim 8, containing styrene as monomer bc).

8. A molding material as claimed in claim 1, wherein the particle diameter of the elastomer phase bb) is in the range from 0.9 to 2.1 $\mu$m.

9. A molding material as claimed in claim 1, wherein the elastomer phase cb) comprises n-butyl acrylate and/or 2-ethylhexyl acrylate.

10. A molding material as claimed in claim 1, wherein the average diameter of the elastomer phase cb) is from 0.05 to 0.15 $\mu$m.

11. A molding material as claimed in claim 1, wherein the average diameter of the elastomer phase cb) is from 0.4 to 0.5 $\mu$m.

12. The use of a molding material as claimed in claim 1 to produce moldings.

13. A molding made from a molding material as claimed in claim 10.

**Revendications**

1. Masse à mouler contenant
   A un polymère qui est composé d'une phase dure et qui contient en liaison polymère, par rapport à A,
      $a_1$) 60 à 80% en poids d'au moins un monomère vinylaromatique
      et
      $a_2$) 20 à 40% en poids d'au moins un monomère à insaturation éthylénique du groupe de l'acrylonitrile et du méthacrylonitrile, ou
      $a_3$) 20 à 40% en poids de méthacrylate d'alkyle,
   la somme des parts de $a_1$) et $a_2$) ou de $a_1$) et $a_3$) étant égale à 100%,
   B un copolymère greffé qui présente
      ba) une phase dure et
      bb) une phase élastomère, avec un diamètre de particules dans la gamme de 0,7 a 10 $\mu$m,
   le copolymère greffé B contenant en liaison polymère, comme monomères, au moins un de chacun des composés suivants:
      bc) un monomère vinylaromatique,
      bd) un monomère à insaturation éthylénique,
      be) un diène aliphatique conjugué,
   et étant tel qu'il est obtenu lorsqu'on polymérise 100 parties en poids d'un mélange des monomères (bc + bd) formant un polymère dur, en présence de 5 à 25 parties en poids d'un polymère ou d'un copolymère élastomère dissous dans ce mélange et en plus, éventuellement, dans un solvant organique inerte, ce polymère ou copolymère servant de base de greffage et étant composé des monomères be) ou be) + bc) ou be) + bd), et 3 à 25% en poids des monomères (bc + bd) formant un polymère dur, par rapport à la somme de bc) et bd), étant greffés sur cette base de greffage,
   C un copolymère greffé qui comporte
      ca) une phase dure en tant que greffon et
      cb) une phase élastomère en tant que support de greffage, cette dernière présentant essentiellement des particules ayant un diamètre moyen dans la gamme de 0,05 à 0,6 $\mu$m et
   le copolymère greffé C contenant, comme constituants, au moins un de chacun des composés suivants:
      cc) un monomère vinylaromatique,
      cd) un monomère à insaturation éthylénique,
      ce) un monomère d'un acrylate d'alkyle à 2-8 atomes de carbone, ainsi que de petites quantités de comonomères à activité de greffage et de réticulation,
   et étant tel qu'il est obtenu lorsqu'on greffe un mélange des monomères (cc + cd) formant la phase dure, en une émulsion aqueuse, sur un polymère caoutchouteux des monomères ce), formant la phase élastomère et servant de support de greffage, dans une proportion de 20 a 60% en poids par rapport à la somme de cc), cd) et ce),
   caractérisée en ce qu'elle contient de 40 à 80% en poids du polymère A et de 20 à 60% en poids des copolymères greffés B + C, chaque fois par rapport à la somme de A + B + C, et en ce que la part de la phase élastomère cb) du copolymère greffé C est supérieure à 90% en poids et ne dépasse pas 98% en poids, par rapport à la somme des phases élastomères cb) et bb).

2. Masse à mouler selon la revendication 1, caractérisée en ce qu'elle comporte, par rapport à 100 parties en poids de A + B + C, de 0,01 à 40 parties en poids d'additifs usuels (composant D).

3. Masse à mouler selon la revendication 1, caractérisée en ce que, pour la préparation du copolymère greffé B, le mélange de monomères contient

de 85 a 85% en poids de styrène, d'$\alpha$-méthylstyrène ou de mélanges de ceux-ci en tant que monomère bc) et

de 15 à 35% en poids de (méth)acrylonitrile en tant que monomère bd).

4. Masse à mouler selon la revendication 3, caractérisée en ce que le mélange de monomères bc) + bd) est polymérisé sur un polymère des monomères be) qui y est dissous à l'aide d'un solvant.

5. Masse à mouler selon la revendication 4, contenant du butadiène en tant que monomère be).

6. Masse à mouler selon la revendication 3, caractérisée en ce que le mélange de monomères bc) + bd) est polymérisé en présence d'un copolymère qui est constitué, pour au moins 50% en poids, des monomères be) et, pour 50% en poids au maximum, du monomère bc), en particulier de styrène.

7. Masse à mouler selon la revendication 6, contenant du styrène en tant que monomère bc).

8. Masse à mouler selon la revendication 1, caractérisée en ce que le diamètre de particules de la phase élastomère bb) se situe dans la gamme de 0,9 à 2,1 $\mu$m.

9. Masse à mouler selon la revendication 1, caractérisée en ce que la phase élastomère cb) se compose d'acrylate de n-butyle et/ou d'acrylate de 2-éthylhexyle.

10. Masse à mouler selon la revendication 1, caractérisée en ce que le diamètre moyen de la phase élastomère cb) est compris entre 0,05 et 0,15 $\mu$m.

11. Masse à mouler selon la revendication 1, caractérisée en ce que le diamètre moyen de la phase élastomère cb) est compris entre 0,4 et 0,5 $\mu$m.

12. Utilisation de la masse à mouler selon la revendication 1 pour la fabrication de pièces moulées.

13. Pièces moulées, fabriquées à partir de masses à mouler selon la revendication 1.